# EUROPEAN PATENT SPECIFICATION

(11) **EP 2 502 432 B1**
(45) Date of publication and mention of the grant of the patent: **25.09.2013**
(21) Application number: 10791011.9
(22) Date of filing: 19.11.2010
(51) Int. Cl.: H04W 8/16, H04W 84/18, H04W 88/06

(54) **METHODS AND APPARATUS FOR ASSISTING IN NETWORK DISCOVERY**
VERFAHREN UND VORRICHTUNG ZUR UNTERSTÜTZUNG BEI DER ENTDECKUNG VON NETZWERKEN
PROCÉDÉS ET APPAREILS D'AIDE À LA DÉCOUVERTE DE RÉSEAU

(30) Priority: 20.11.2009 US 263258 P; 01.02.2010 US 300198 P; 16.08.2010 US 856812
(43) Date of publication of application: 26.09.2012
(73) Proprietor: Qualcomm Incorporated, San Diego, CA 92121 (US)
(72) Inventor: SAMPATH, Hemanth, San Diego, California 92121 (US); JAIN, Avinash, San Diego, California 92121 (US); TAGHAVI NASRABADI, Mohammad Hossein, San Diego, California 92121 (US)
(74) Representative: Schmidbauer, Andreas Konrad
(86) International application number: PCT/US2010/057338
(87) International publication number: WO 2011/063182

(56) References cited:
- EP-A1- 1 333 627
- EP-A1- 1 708 437
- WO-A1-2004/006468
- WO-A1-2008/061810
- US-A1- 2008 069 047

## Description

### BACKGROUND

### Field

The present disclosure relates generally to communication systems, and more particularly, to assist in discovery of a directional communications network using an omni-directional communications network.

### Introduction

In order to address the issue of increasing bandwidth requirements that are demanded for wireless communications systems, different schemes are being developed to allow multiple user terminals to communicate by sharing the channel resources while achieving high data throughputs. Multiple Input or Multiple Output (MIMO) technology represents one such approach that has recently emerged as a popular technique for the next generation communication systems. MIMO technology has been adopted in several emerging wireless communications standards such as the Institute of Electrical Engineers (IEEE) 802.11 standard. IEEE 802.11 denotes a set of Wireless Local Area Network (WLAN) air interface standards developed by the IEEE 802.11 committee for short-range communications (e.g., tens of meters to a few hundred meters), for example, 802.11 ad/ac/a/b/g/n.

Generally, wireless communications systems specified by the IEEE 802.11 standard have a central entity, such as an access point (AP)/point coordination function (PCF) that manages communications between different devices, also called stations (STAs). Having a central entity may simplify design of communication protocols. Further, although any device capable of transmitting a beacon signal may serve as an AP, for an AP to be effective it may have to have a good link quality to all STAs in a network. At high frequencies, where signal attenuation may be relatively severe, communications may be directional in nature and may use beamforming (e.g., beam training) to increase gains. As such, an AP may stratify the following responsibilities to be effective. The AP may have a large sector bound (e.g., a wide steering capability). The AP may have a large beamforming gain (e.g., multiple antennas). The AP may be mounted so that a line of sight path exists to most areas in a network, such as on a ceiling. The AP may use a steady power supply for periodic beacon transmissions and other management functions.

Mobile wireless communications devices (WCD) (e.g., laptops, smartphones, etc.) may have comparatively reduced capabilities to that of a traditional AP due to factors such as cost, power, form factor, etc. For example, antenna steering capability may be limited to a small sector bound, available power may be limited, location may be variable, etc. Even with these limitations, WCDs may be asked to perform as APs to form peer-to-peer networks for various purposes, such as side-loading, file sharing, etc.

In some wireless communications systems, WCDs may be equipped with multi-mode radios with different frequency transceivers, for example a 60 GHz transceiver, a 2.4 GHz transceiver, a 5 GHz transceiver, etc. As lower frequency communications may be performed omni-directionally while higher frequency communications may be performed directionally, it may be useful to use a network based on an omni-directional protocol to locate and set up communications using a directional protocol.

Attention is drawn to EP 1 708 437 A1 which describes a Neighbor Location Discovery Protocol (NLDP) that determines the relative locations of the nodes in a mesh network. NLDP can be implemented for an ad-hoc wireless network where the nodes are equipped with directional antennas and are not able to use GPS. While NLDP relies on nodes having at least two RF transceivers, it offers significant advantages over previously proposed protocols that employ only one RF transceiver. In NLDP antenna hardware is simple, easy to implement, and readily available. Further, NLDP exploits the host node's ability to operate simultaneously over non-overlapping channels to quickly converge on the neighbor's location. NLDP is limited by the range of the control channel, which operates in a omni-directional fashion. However, by choosing a low frequency band, high power, and low data rate, the range of the control channel can be increased to match the range on the data channel.

Attention is further drawn to which EP 1 333 627 A1 which describes a method for establishing a connection between terminals having a short-range wireless communication interface (IT1) and an interface (IT2) for communicating with a cellular radio communication network, comprising the steps of: Registering in an entity of the cellular radio communication network an identifier of at least two terminals having a short-range wireless communication interface (IT1) together with a localisation information and an identifier of their short-range wireless communication interface (IT1); Identifying at the entity, by using localisation information, two terminals having a short-range communication interface as potential communication counterparts when each terminal is under the range of its potential communication counterpart's short-range wireless communication interface; Transmitting a message to the identified terminals over the cellular radio communication network comprising the identification of the short-range wireless interface of its potential communication counterpart; Establishing a direct short-range communication between the two terminals.

### SUMMARY

In accordance with the present invention a method, and an apparatus, as set forth in the independent claims, respectively, are provided. Preferred embodiments of the invention are described in the dependent claims.

Another aspect relates to an apparatus. The apparatus can include a processing system configured to: obtain connectivity information using a first protocol for one or more apparatuses, and establish a session with one of the one or more apparatuses for directional communication using a second protocol, wherein the first protocol is different than the second protocol.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

These and other sample aspects of the invention will be described in the detailed description that follow, and in the accompanying drawings, wherein:

FIG. 1 illustrates a block diagram of a communication network according to an aspect;

FIG. 2 is a flowchart of an aspect of a communication network depicting assisting in discovery of a directional communications network using an omni-directional communications network;

FIG. 3 illustrates a block diagram example architecture of a wireless communications device;

FIG. 4 illustrates exemplary block diagram of a connectivity assistance system according to an aspect;

FIG. 5 illustrates another block diagram example architecture of a wireless node;

FIG. 6 illustrates a conceptual diagram illustrating an example of a hardware configuration for a processing system in a wireless node; and

FIG. 7 is a conceptual block diagram illustrating the functionality of an exemplary apparatus.

In accordance with common practice, some of the drawings may be simplified for clarity. Thus, the drawings may not depict all of the components of a given apparatus (e.g., device) or method. Finally, like reference numerals may be used to denote like features throughout the specification and figures.

### DETAILED DESCRIPTION

Various aspects of methods and apparatus are described more fully hereinafter with reference to the accompanying drawings. These methods and apparatus may, however, be embodied in many different forms and should not be construed as limited to any specific structure or function presented throughout this disclosure. Rather, these aspects are provided so that this disclosure will be thorough and complete, and will fully convey the scope of these methods and apparatus to those skilled in the art. Based on the descriptions herein teachings herein one skilled in the art should appreciate that that the scope of the disclosure is intended to cover any aspect of the methods and apparatus disclosed herein, whether implemented independently of or combined with any other aspect of the disclosure. For example, an apparatus may be implemented or a method may be practiced using any number of the aspects set forth herein. In addition, the scope of the disclosure is intended to cover such an apparatus or method which is practiced using other structure, functionality, or structure and functionality in addition to or other than the various aspects of the disclosure set forth herein. It should be understood that any aspect of the disclosure herein may be embodied by one or more elements of a claim.

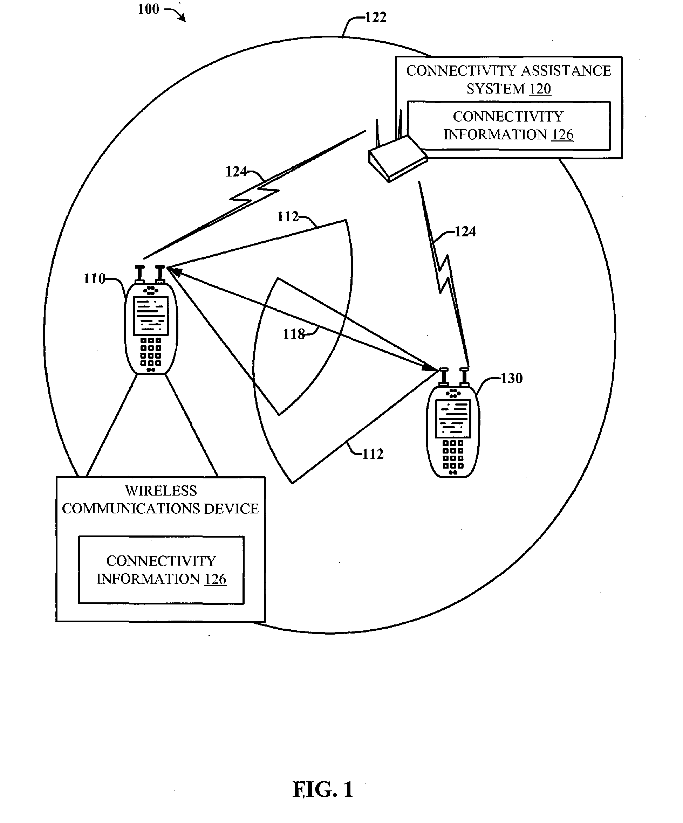

Several aspects of a wireless network will now be presented with reference to **FIG. 1**. The wireless communication system 100 is shown with several wireless nodes, generally designated as nodes 110 and 130, a wireless network device 120, generally a WLAN device, a base station, etc., wherein the several nodes 110, 130 may communicate using several protocols 118, 124 associated with several networks 112, 122. As used herein, a wireless node 110, 130 may be referred to as a WCD, user equipment (UE), a laptop, etc. Each wireless node is capable of receiving and/or transmitting. In the detailed description that follows, the term "access point" is used to designate a transmitting node and the term "access terminal" is used to designate a receiving node for downlink communications, whereas the term "access point" is used to designate a receiving node and the term "access terminal" is used to designate a transmitting node for uplink communications. However, those skilled in the art will readily understand that other terminology or nomenclature may be used for an access point and/or access terminal. By way of example, an access point may be referred to as a base station, a base transceiver station, a station, a terminal, a node, an access terminal acting as an access point, a WLAN device, or some other suitable terminology. An access terminal may be referred to as a user terminal, a mobile station, a subscriber station, a station, a wireless device, a terminal, a node, or some other suitable terminology. The various concepts described throughout this disclosure are intended to apply to all suitable wireless nodes regardless of their specific nomenclature.

The wireless communication system 100 may support access terminals distributed throughout a geographic region. Connectivity assistance system 120 may be used to provide coordination and control of the access terminals, as well as access to other networks (e.g., Internet). An access terminal, which may be fixed or mobile, may use backhaul services of an access point or engage in peer-to-peer communications with other access terminals. Examples of access terminals include a telephone (e.g., cellular telephone), a laptop computer, a desktop computer, a Personal Digital Assistant (PDA), a digital audio player (e.g., MP3 player), a camera, a game console, or any other suitable wireless node.

In operation, access terminal 110 may seek to establish a communication session 118 with access terminal 130 using a protocol which is directionally based 112. To facilitate establishing this communication session, access terminal 110 may communicate with connectivity assistance system 120 using an omni-directional protocol 124. In such an aspect, access terminal 110 may use the omni-directional protocol 124 since such a protocol may have a larger network coverage region 122 than the directionally based protocol network coverage region 112. Further, connectivity assistance system 120 may provide connectivity information 126 associated with various access terminals 130 etc., which may be available for communications using the directionally based protocol 118. Connectivity information 126 may include: device identifiers for one or more access terminals 130, media access control layer addresses for one or more access terminals 130, location information for one or more access terminals 130, timing information for one or more access terminals 130, a number of antennas available for one or more access terminals 130, directions available for communication for one or more access terminals 130, directionally based protocol compatibility information for one or more access terminals 130, a list of directionally based protocol channels available for communication for one or more access terminals 130, etc. In one aspect, location information for the one or more access terminals 130 may be determined using a received signal strength indicator (RSSI) measurement from the omni-directional protocol 124. In another aspect, location information for the one or more access terminals 130 may be determined using a round trip delay time measurement associated with the omni-directional protocol 124. In one aspect, omni-directional protocol may include use of request to send (RTS) and clear to send (CTS) messages. In such an aspect, the round trip delay value may be determined using the departure time of the RTS message and the arrival time of the CTS message. In another aspect, omni-directional protocol may include use of a probe message and an acknowledgment (ACK) message. In such an aspect, the round trip delay value may be determined using the departure time of a probe message and the arrival time of an ACK message.

The wireless communication system 100 may support MIMO technology. Using MIMO technology, multiple access terminals 120 may communicate simultaneously using Spatial Division Multiple Access (SDMA). SDMA is a multiple access scheme which enables multiple streams transmitted to different receivers at the same time to share the same frequency channel, or communicate using different frequencies, and, as a result, provide higher user capacity. This is achieved by spatially precoding each data stream and then transmitting each spatially precoded stream through a different transmit antenna on the downlink. The spatially precoded data streams arrive at the access terminals with different spatial signatures, which enables each access terminal 110, 130 to recover the data stream destined for that access terminal 110, 130. On the uplink, each access terminal 110, 1300 transmits a spatially precoded data stream, which enables the identity of the source of each spatially precoded data stream to be known.

One or more access terminals 110 may be equipped with multiple antennas to enable certain functionality. With this configuration, multiple antennas at the access terminal 110 may be used to communicate to improve data throughput without additional bandwidth or transmit power. This may be achieved by splitting a high data rate signal at the transmitter into multiple lower rate data streams with different spatial signatures, thus enabling the receiver to separate these streams into multiple channels and properly combine the streams to recover the high rate data signal.

While portions of the following disclosure will describe access terminals that also support MIMO technology, the access terminal 110 may also be configured to support access terminals that do not support MIMO technology. This approach may allow older versions of access terminals (i.e., "legacy" terminals) to remain deployed in a wireless network, extending their useful lifetime, while allowing newer MIMO access terminals to be introduced as appropriate.

In the detailed description that follows, various aspects of the disclosure will be described with reference to a MIMO system supporting any suitable wireless technology, such as Orthogonal Frequency Division Multiplexing (OFDM). OFDM is a spread-spectrum technique that distributes data over a number of subcarriers spaced apart at precise frequencies. The spacing provides "orthogonality" that enables a receiver to recover the data from the subcarriers. An OFDM system may implement IEEE 802.11, or some other air interface standard. Other suitable wireless technologies include, by way of example, Code Division Multiple Access (CDMA), Time Division Multiple Access (TDMA), or any other suitable wireless technology, or any combination of suitable wireless technologies. A CDMA system may implement with IS-2000, IS-95, IS-856, Wideband-CDMA (WCDMA), or some other suitable air interface standard. A TDMA system may implement Global System for Mobile Communications (GSM) or some other suitable air interface standard. As those skilled in the art will readily appreciate, the various aspects of this invention is not limited to any particular wireless technology and/or air interface standard.

The wireless node (e.g., 110, 130), whether an access point or access terminal, may be implemented with a protocol that utilizes a layered structure that includes a physical (PHY) layer that implements all the physical and electrical specifications to interface the wireless node to the shared wireless channel, a Medium Access Control (MAC) layer that coordinates access to the shared wireless channel, and an application layer that performs various data processing functions including, by way of example, speech and multimedia codecs and graphics processing. Additional protocol layers (e.g., network layer, transport layer) may be required for any particular application. In some configurations, the wireless node may act as a relay point between an access point and access terminal, or two access terminals, and therefore, may not require an application layer. Those skilled in the art will be readily able to implement the appropriate protocol for any wireless node depending on the particular application and the overall design constraints imposed on the overall system.

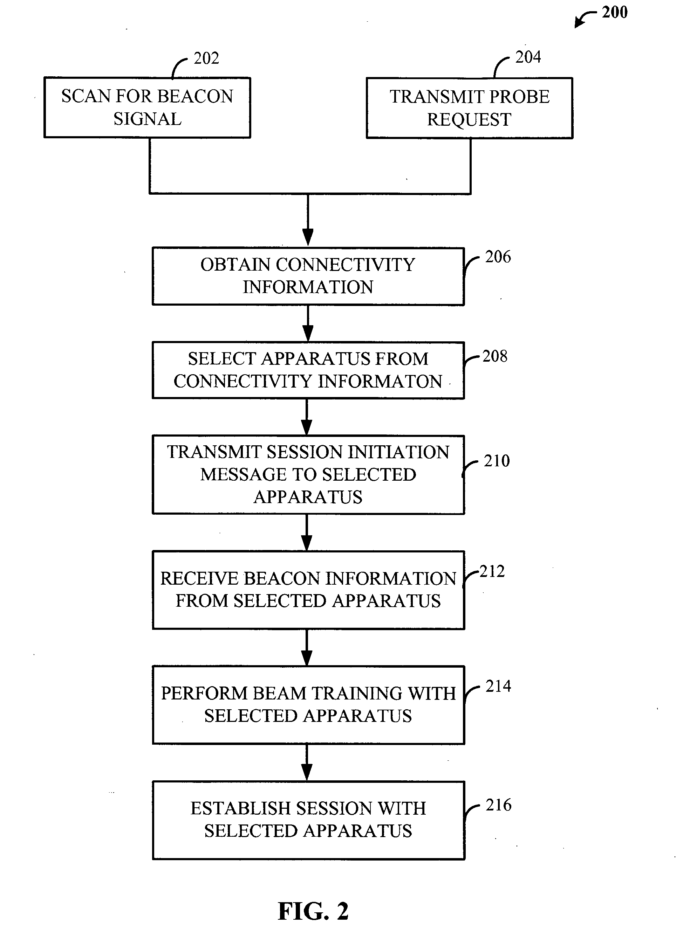

**FIG. 2** illustrates various methodologies in accordance with the claimed subject matter. While, for purposes of simplicity of explanation, the methodologies are shown and described as a series of acts, it is to be understood and appreciated that the claimed subject matter is not limited by the order of acts, as some acts may occur in different orders and/or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology in accordance with the claimed subject matter. Additionally, it should be further appreciated that the methodologies disclosed hereinafter and throughout this specification are capable of being stored on an article of manufacture to facilitate transporting and transferring such methodologies to computers. The term article of manufacture, as used herein, is intended to encompass a computer program accessible from any computer-readable device, carrier, or media.

Referring to **FIG. 2****,** a wireless node may be assisted in the process of discovering of a directional communications network using an omni-directional communications network. At reference numeral 202, a wireless node may scan for beacon signals associated with one or more available nodes. Additionally, or in the alternative, at reference numeral 204, the wireless node may transmit a probe request to locate one or more available nodes. In the depicted process, both the scanning and transmitting may be performed using a first protocol, wherein the first protocol may use a frequency which is omni-directional. At reference numeral 206, the wireless node obtains connectivity information for at least one of the one or more available nodes. In one aspect, the connectivity information is provided by the available node, in another aspect, a connectivity assistance system may aggregate node availability and may provide such information to the requesting wireless node. Additionally, obtaining connectivity information may be performed using a first protocol, wherein the first protocol may use a frequency which is omni-directional. Further, such connectivity information may be provided in a channel select message, which includes a list of higher frequency, directionally based, available channels. At reference numeral 208, one of the one or more available nodes may be selected. In one aspect, selection may be based on multiple factors, such as but not limited to: on a highest first protocol (e.g., omni-directional) link quality, a defined functional capability, a defined device identifier, etc. In one aspect, where multiple available nodes are detected, a filtering process may be used prior to attempting to connect with any of the available nodes. In such an aspect, a filtering process for discovering available nodes may include at of: varying the transmission strength used, using a higher transmission rate, using a path loss filter and only receiving signals with strengths above a defined threshold, not accepting signals from devices which are not enabled to communicate using a second, higher frequency, protocol. At reference numeral 210, a session initiation message may be transmitted to the selected available node. In one aspect, such a transmission may be performed using a first protocol, wherein the first protocol may use a frequency which is omni-directional, and may prompt the available device to enable communications using a second, higher frequency protocol. In such an aspect, the second protocol may transmit data at a higher rate than the first protocol.

At reference numeral 212, beacon information is received from the selected available wireless node, at reference numeral 214 beam training may be performed, and at reference numeral 216 a communication session with the selected available node is established. In one aspect, receiving beacon information, beam training and establishing the communication session may be performed using a second, higher frequency, directionally based protocol. In another aspect, assuming establishing a communication session fails, then establishing a communication session may be attempted again, and/or a communication session using the first protocol may be established. Once a communication session is established, the requesting node and the selected available node may communicate using the higher frequency second protocol which allows for communication of data at a higher rate than the lower frequency first protocol.

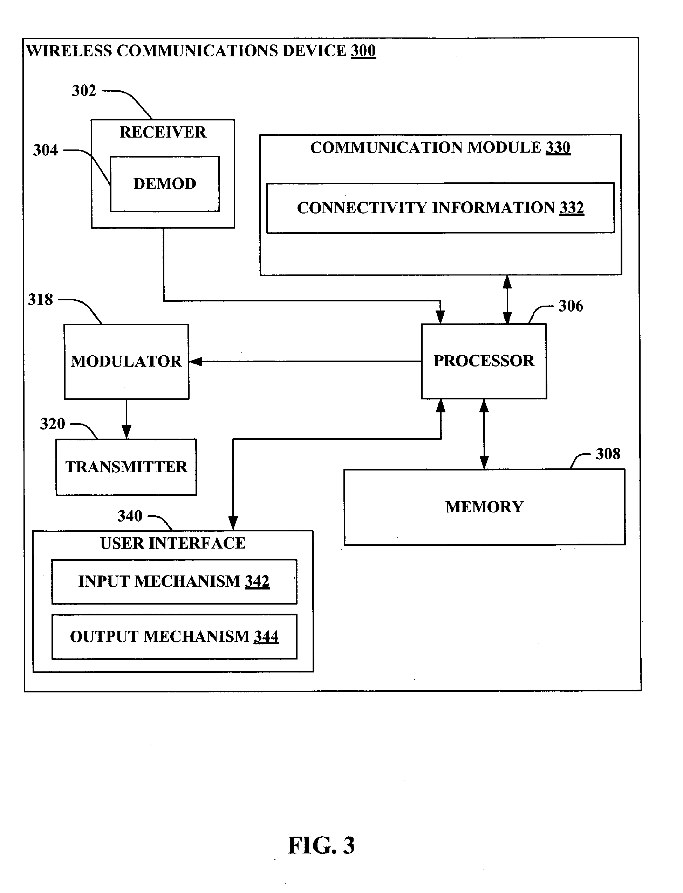

While still referencing FIG. 1, but turning also now to **FIG. 3****,** an example architecture of wireless communications device 110 is illustrated. As depicted in FIG. 3, wireless communications device 300 comprises receiver 302 that receives a signal from, for instance, a receive antenna (not shown), performs typical actions on (e.g., filters, amplifies, downconverts, etc.) the received signal, and digitizes the conditioned signal to obtain samples. Receiver 302 can comprise a demodulator 304 that can demodulate received symbols and provide them to processor 306 for channel estimation. Further, receiver 302 may receive signals from multiple networks using multiple communication protocols. In one aspect, receiver 302 may receive a signal from a network using at least one of: CDMA, WCDMA, TDMA, TD-SCDMA, UMTS, IP, GSM, LTE, WiMax, UMB, EV-DO, 802.11, BLUETOOTH, etc.

Processor 306 can be a processor dedicated to analyzing information received by receiver 302 and/or generating information for transmission by transmitter 320, a processor that controls one or more components of wireless communications device 300, and/or a processor that both analyzes information received by receiver 302, generates information for transmission by transmitter 320, and controls one or more components of wireless communications device 300.

Wireless communications device 300 can additionally comprise memory 308 that is operatively coupled to, and/or located in, processor 306 and that can store data to be transmitted, received data, information related to available channels, data associated with analyzed signal and/or interference strength, information related to an assigned channel, power, rate, or the like, and any other suitable information for estimating a channel and communicating via the channel. Memory 308 can additionally store protocols and/or algorithms associated with estimating and/or utilizing a channel (e.g., performance based, capacity based, etc.).

It will be appreciated that data store (e.g., memory 308) described herein can be either volatile memory or nonvolatile memory, or can include both volatile and nonvolatile memory. By way of illustration, and not limitation, nonvolatile memory can include read only memory (ROM), programmable ROM (PROM), electrically programmable ROM (EPROM), electrically erasable PROM (EEPROM), or flash memory. Volatile memory can include random access memory (RAM), which acts as external cache memory. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), and direct Rambus RAM (DRRAM). Memory 308 of the subject systems and methods may comprise, without being limited to, these and any other suitable types of memory.

Wireless communications device 300 can further include communication module 330 to assist in discovery of a directional communications network using an omni-directional communications network. Communications module 330 may include connectivity information 332. In one aspect, connectivity information 332 may include: device identifiers for one or more access terminals, media access control layer addresses for one or more access terminals, location information for one or more access terminals, timing information for one or more access terminals, a number of antennas available for one or more access terminals, directions available for communication for one or more access terminals, directionally based protocol compatibility information for one or more access terminals, a list of directionally based protocol channels available for communication for one or more access terminals, etc. In one aspect, location information for the one or more access terminals may be determined using a RSSI measurement from the omni-directional protocol. In another aspect, location information for the one or more access terminals may be determined using a round trip delay time measurement associated with the omni-directional protocol. In one aspect, omni-directional protocol may include use of RTS and CTS messages. In such an aspect, the round trip delay value may be determined using the departure time of the RTS message and the arrival time of the CTS message. In another aspect, omni-directional protocol may include use of a probe message and an acknowledgment (ACK) message. In such an aspect, the round trip delay value may be determined using the departure time of a probe message and the arrival time of an ACK message.

Additionally, wireless communications device 300 may include user interface 340. User interface 340 may include input mechanisms 342 for generating inputs into communications device 300, and output mechanism 342 for generating information for consumption by the user of the communications device 300. For example, input mechanism 342 may include a mechanism such as a key or keyboard, a mouse, a touch-screen display, a microphone, etc. Further, for example, output mechanism 344 may include a display, an audio speaker, a haptic feedback mechanism, a Personal Area Network (PAN) transceiver etc. In the illustrated aspects, the output mechanism 344 may include a display operable to present media content that is in image or video format or an audio speaker to present media content that is in an audio format.

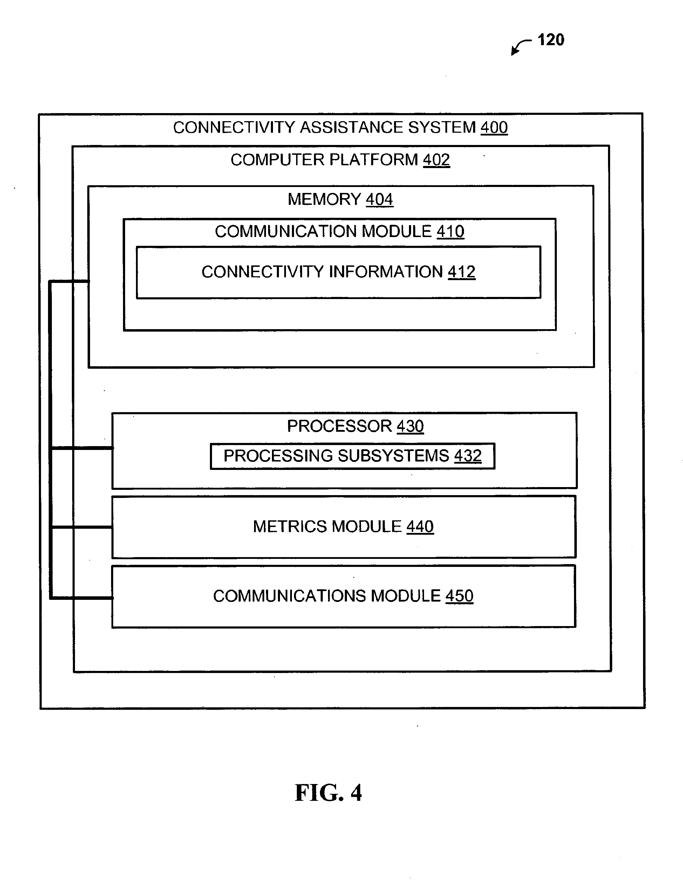

With reference to **FIG. 4****,** illustrated is a detailed block diagram of connectivity assistance system 400, such as connectivity assistance system 120 depicted in FIG. 1. Connectivity assistance system 400 may comprise at least one of any type of hardware, server, personal computer, mini computer, mainframe computer, or any computing device either special purpose or general computing device. Further, the modules and applications described herein as being operated on or executed by connectivity assistance system 400 may be executed entirely on a single network device, as shown in FIG. 4, or alternatively, in other aspects, separate servers, databases or computer devices may work in concert to provide data in usable formats to parties, and/or to provide a separate layer of control in the data flow between communications devices 110, 130 and the modules and applications executed by connectivity assistance system 400.

Connectivity assistance system 400 includes computer platform 402 that can transmit and receive data across wired and wireless networks, and that can execute routines and applications. Computer platform 402 includes memory 404, which may comprise volatile and nonvolatile memory such as read-only and/or random-access memory (ROM and RAM), EPROM, EEPROM, flash cards, or any memory common to computer platforms. Further, memory 404 may include one or more flash memory cells, or may be any secondary or tertiary storage device, such as magnetic media, optical media, tape, or soft or hard disk. Further, computer platform 402 also includes processor 430, which may be an application-specific integrated circuit ("ASIC"), or other chipset, logic circuit, or other data processing device. Processor 430 may include various processing subsystems 432 embodied in hardware, firmware, software, and combinations thereof, that enable the functionality of connectivity assistance system 400 and the operability of the network device on a wired or wireless network.

Computer platform 402 further includes communications module 450 embodied in hardware, firmware, software, and combinations thereof, that enables communications among the various components of connectivity assistance system 400, as well as between connectivity assistance system 400, and devices 110, 130. Communication module 450 may include the requisite hardware, firmware, software and/or combinations thereof for establishing a wireless communication connection.

Computer platform 402 further includes metrics module 440 embodied in hardware, firmware, software, and combinations thereof that enables metrics received from devices 110, 130 corresponding to, among other things, data communicated between devices 110 and 130. In one aspect, connectivity assistance system 400 may analyze data received through metrics module 440 to modify data prepared for future distribution to device 110 and/or device 130. For example, if the metrics module 440 returns data indicating that device 130 is not operable using a second, higher frequency protocol, then connectivity assistance system 400 may update connectivity information 412 accordingly.

Memory 404 of connectivity assistance system 400 includes communication module 410 operable for assisting a device 110 in discovery of a directional communications network to establish a communication session with another device 130 using an omni-directional communications network to set up the connection. In one aspect, communication module 410 may include connectivity information 412, and one or available devices (e.g., device 130). In one aspect, connectivity information 412 may include: device identifiers for one or more access terminals, media access control layer addresses for one or more access terminals, location information for one or more access terminals, timing information for one or more access terminals, a number of antennas available for one or more access terminals, directions available for communication for one or more access terminals, directionally based protocol compatibility information for one or more access terminals, a list of directionally based protocol channels available for communication for one or more access terminals, etc. In one aspect, location information for the one or more access terminals may be determined using a RSSI measurement from the omni-directional protocol. In another aspect, location information for the one or more access terminals may be determined using a round trip delay time measurement associated with the omni-directional protocol. In one aspect, omni-directional protocol may include use of RTS and CTS messages. In such an aspect, the round trip delay value may be determined using the departure time of the RTS message and the arrival time of the CTS message. In another aspect, omni-directional protocol may include use of a probe message and an ACK message. In such an aspect, the round trip delay value may be determined using the departure time of a probe message and the arrival time of an ACK message.

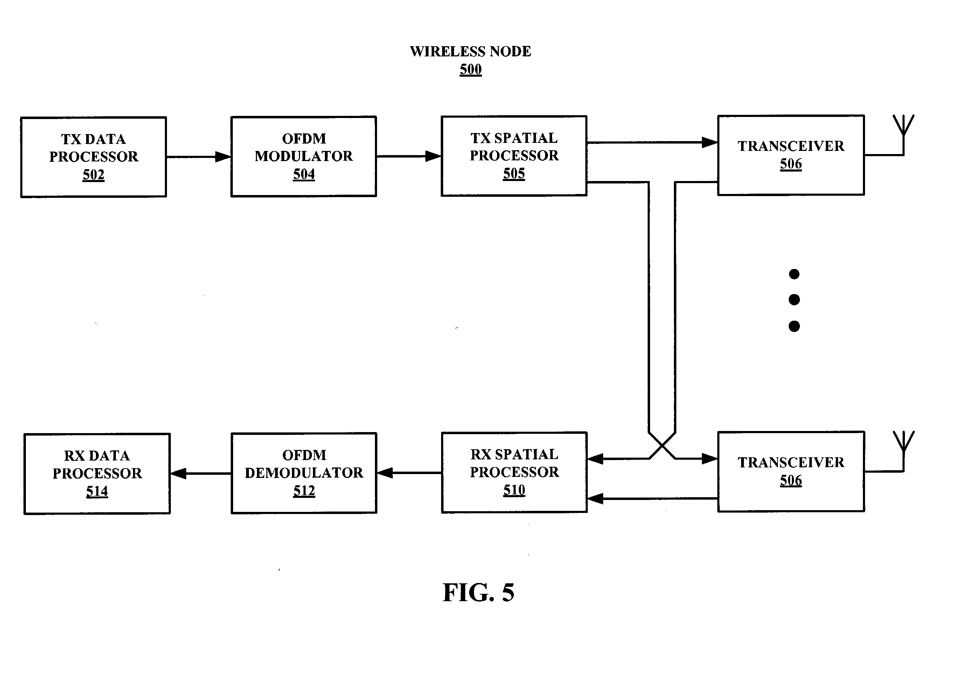

FIG. 5 is a conceptual block diagram illustrating an example of the signal processing functions of the PHY layer. In a transmit mode, a TX data processor 502 may be used to receive data from the MAC layer and encode (e.g., Turbo code) the data to facilitate forward error correction (FEC) at the receiving node. The encoding process results in a sequence of code symbols that that may be blocked together and mapped to a signal constellation by the TX data processor 502 to produce a sequence of modulation symbols.

In wireless nodes implementing OFDM, the modulation symbols from the TX data processor 502 may be provided to an OFDM modulator 504. The OFDM modulator splits the modulation symbols into parallel streams. Each stream is then mapped to an OFDM subcarrier and then combined together using an Inverse Fast Fourier Transform (IFFT) to produce a time domain OFDM stream.

A TX spatial processor 506 performs spatial processing on the OFDM stream. This may be accomplished by spatially precoding each OFDM and then providing each spatially precoded stream to a different antenna 508 via a transceiver 506. Each transmitter 506 modulates an RF carrier with a respective precoded stream for transmission over the wireless channel.

In a receive mode, each transceiver 506 receives a signal through its respective antenna 508. Each transceiver 506 may be used to recover the information modulated onto an RF carrier and provide the information to a RX spatial processor 510.

The RX spatial processor 510 performs spatial processing on the information to recover any spatial streams destined for the wireless node 500. The spatial processing may be performed in accordance with Channel Correlation Matrix Inversion (CCMI), Minimum Mean Square Error (MMSE), Soft Interference Cancellation (SIC), or some other suitable technique. If multiple spatial streams are destined for the wireless node 500, they may be combined by the RX spatial processor 510.

In wireless nodes implementing OFDM, the stream (or combined stream) from the RX spatial processor 510 is provided to an OFDM demodulator 512. The OFDM demodulator 512 converts the stream (or combined stream) from time-domain to the frequency domain using a Fast Fourier Transform (FFT). The frequency domain signal comprises a separate stream for each subcarrier of the OFDM signal. The OFDM demodulator 512 recovers the data (e.g., modulation symbols) carried on each subcarrier and multiplexes the data into a stream of modulation symbols.

A RX data processor 514 may be used to translate the modulation symbols back to the correct point in the signal constellation. Because of noise and other disturbances in the wireless channel, the modulation symbols may not correspond to an exact location of a point in the original signal constellation. The RX data processor 514 detects which modulation symbol was most likely transmitted by finding the smallest distance between the received point and the location of a valid symbol in the signal constellation. These soft decisions may be used, in the case of Turbo codes, for example, to compute a Log-Likelihood Ratio (LLR) of the code symbols associated with the given modulation symbols. The RX data processor 514 then uses the sequence of code symbol LLRs in order to decode the data that was originally transmitted before providing the data to the MAC layer.

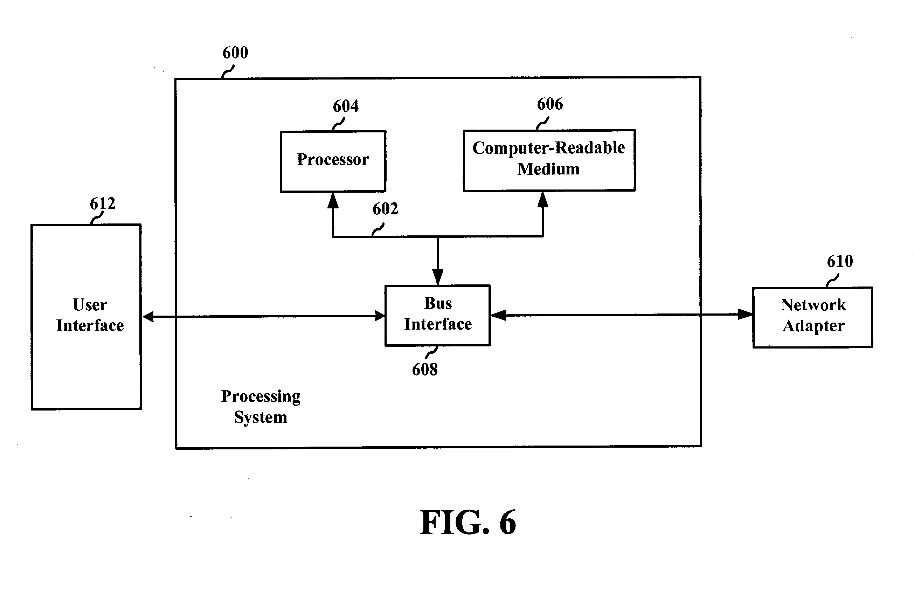

FIG. 6 is a conceptual diagram illustrating an example of a hardware configuration for a processing system in a wireless node. In this example, the processing system 600 may be implemented with a bus architecture represented generally by bus 602. The bus 602 may include any number of interconnecting buses and bridges depending on the specific application of the processing system 600 and the overall design constraints. The bus links together various circuits including a processor 604, computer-readable media 606, and a bus interface 608. The bus interface 608 may be used to connect a network adapter 610, among other things, to the processing system 600 via the bus 602. The network interface 610 may be used to implement the signal processing functions of the PHY layer. In the case of an access terminal 110 (see FIG. 1), a user interface 612 (e.g., keypad, display, mouse, joystick, etc.) may also be connected to the bus via the bus interface 608. The bus 602 may also link various other circuits such as timing sources, peripherals, voltage regulators, power management circuits, and the like, which are well known in the art, and therefore, will not be described any further.

The processor 604 is responsible for managing the bus and general processing, including the execution of software stored on the computer-readable media 608. The processor 608 may be implemented with one or more general-purpose and/or special-purpose processors. Examples include microprocessors, microcontrollers, digital signal processors (DSPs), field programmable gate arrays (FPGAs), programmable logic devices (PLDs), state machines, gated logic, discrete hardware circuits, and other suitable hardware configured to perform the various functionality described throughout this disclosure.

One or more processors in the processing system may execute software. Software shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise.

The software may reside on a computer-readable medium. A computer-readable medium may include, by way of example, a magnetic storage device (e.g., hard disk, floppy disk, magnetic strip), an optical disk (e.g., compact disk (CD), digital versatile disk (DVD)), a smart card, a flash memory device (e.g., card, stick, key drive), random access memory (RAM), read only memory (ROM), programmable ROM (PROM), erasable PROM (EPROM), electrically erasable PROM (EEPROM), a register, a removable disk, a carrier wave, a transmission line, or any other suitable medium for storing or transmitting software. The computer-readable medium may be resident in the processing system, external to the processing system, or distributed across multiple entities including the processing system. Computer-readable medium may be embodied in a computer-program product. By way of example, a computer-program product may include a computer-readable medium in packaging materials.

In the hardware implementation illustrated in FIG. 6, the computer-readable media 606 is shown as part of the processing system 600 separate from the processor 604. However, as those skilled in the art will readily appreciate, the computer-readable media 606, or any portion thereof, may be external to the processing system 600. By way of example, the computer-readable media 606 may include a transmission line, a carrier wave modulated by data, and/or a computer product separate from the wireless node, all which may be accessed by the processor 604 through the bus interface 608. Alternatively, or in addition to, the computer readable media 604, or any portion thereof, may be integrated into the processor 604, such as the case may be with cache and/or general register files.

The processing system, or any part of the processing system, may provide the means for performing the functions recited herein. By way of example, the processing system executing code may provide the means for obtaining connectivity information using a first protocol for one or more apparatuses, and means for establishing a session with one of the one or more apparatuses for directional communication using a second protocol, wherein the first protocol is different than the second protocol. Alternatively, the code on the computer-readable medium may provide the means for performing the functions recited herein.

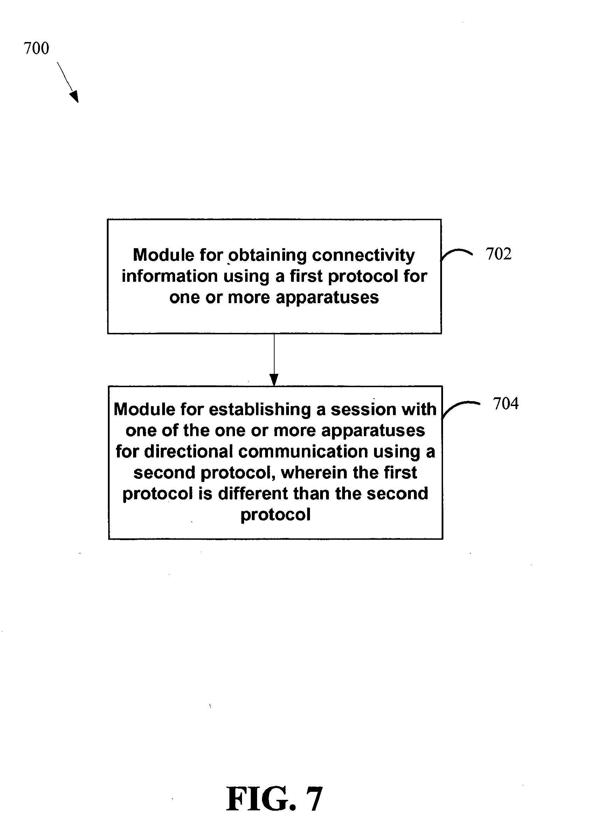

FIG. 7 is a conceptual block diagram 700 illustrating the functionality of an exemplary apparatus 600. The apparatus 600 includes a module 702 that obtains connectivity information using a first protocol for one or more apparatuses, and a module 904 that establishes a session with one of the one or more apparatuses for directional communication using a second protocol, wherein the first protocol is different than the second protocol.

Referring to FIG. 1 and FIG. 6, in one configuration, the apparatus 600 for wireless communication includes means for obtaining connectivity information using a first protocol for one or more apparatuses, and means for establishing a session with one of the one or more apparatuses for directional communication using a second protocol, wherein the first protocol is different than the second protocol. In another configuration, the apparatus 600 for wireless communication includes means for transmitting initial connectivity information, and means for receiving the connectivity information in response to the transmitted initial connectivity information. In another configuration, the apparatus 600 for wireless communication includes means for scanning for a beacon signal, associated with at least one of the one or more apparatuses, across multiple channels using the first protocol. In another configuration, the apparatus 600 for wireless communication includes means for transmitting a probe request, and means for receiving at least one probe response from the one or more apparatuses. In another configuration, the apparatus 600 for wireless communication includes means for determining the location information using a RSSI measurement using the first protocol. In another configuration, the apparatus 600 for wireless communication includes means for determining the location information using a round-trip delay time measurement obtained using the first protocol. In another configuration, the apparatus 600 for wireless communication includes means for obtaining the round trip delay time measurement using a departure time of a request to send message and an arrival time of a clear to send message. In another configuration, the apparatus 600 for wireless communication includes means for obtaining the round trip delay time measurement using a departure of a probe message and an arrival time of an acknowledgement message. In another configuration, the apparatus 600 for wireless communication includes means for selecting the one of the one or more apparatuses, means for transmitting a session initiation message using the first protocol to prompt the selected node to activate a transceiver associated with the second protocol, means for receiving beacon information from the selected one of the one or more apparatuses, and means for performing beam training with the selected one of the one or more apparatuses. The aforementioned means is the processing system 600 configured to perform the functions recited by the aforementioned means. As described supra, the processing system 600 includes the TX Processor 502, the RX Processor 514, and processors 505 and 510. As such, in one configuration, the aforementioned means may be the TX Processor 502, the RX Processor 514, and processors 505 and 510 configured to perform the functions recited by the aforementioned means.

Those skilled in the art will recognize how best to implement the described functionality presented throughout this disclosure depending on the particular application and the overall design constraints imposed on the overall system.

It is understood that any specific order or hierarchy of steps described in the context of a software module is being presented to provide an examples of a wireless node. Based upon design preferences, it is understood that the specific order or hierarchy of steps may be rearranged while remaining within the scope of the invention.

The previous description is provided to enable any person skilled in the art to fully understand the full scope of the disclosure. Modifications to the various configurations disclosed herein will be readily apparent to those skilled in the art. Thus, the claims are not intended to be limited to the various aspects of the disclosure described herein, but is to be accorded the full scope consistent with the language of claims, wherein reference to an element in the singular is not intended to mean "one and only one" unless specifically so stated, but rather "one or more." Unless specifically stated otherwise, the term "some" refers to one or more. A claim that recites at least one of a combination of elements (e.g., "at least one of A, B, or C") refers to one or more of the recited elements (e.g., A, or B, or C, or any combination thereof). All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. No claim element is to be construed under the provisions of 35 U.S.C. §112, sixth paragraph, unless the element is expressly recited using the phrase "means for" or, in the case of a method claim, the element is recited using the phrase "step for."

In one or more exemplary aspects, the functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where disks usually reproduce data magnetically, while discs reproduce data optically with lasers. Combinations of the above should also be included within the scope of computer-readable media.

## Claims

1. A method (200) of wireless communications, comprising:
obtaining (206) at first apparatus (110) connectivity information (126) for one or more second apparatuses (130) from a connectivity assistance system (120) using a first protocol (124); and
establishing (216) a session with one of the one or more second apparatuses selected based on the connectivity information for direct and directional communication using a directionally based second protocol (112), wherein the first protocol is different than the second protocol.

2. The method of claim 1, wherein the connectivity information is obtained by transmitting initial connectivity information and receiving the connectivity information in response to the transmitted initial connectivity information.

3. The method of claim 1, wherein the connectivity information is obtained by scanning for a beacon signal, associated with at least one of the one or more second apparatuses, across multiple channels using the first protocol.

4. The method of claim 1, wherein the connectivity information is obtained by transmitting a probe request and receiving at least one probe response from the one or more second apparatuses using the first protocol.

5. The method of claim 1, wherein the connectivity information comprises device identifiers for the one or more second apparatuses; and/or
wherein the connectivity information comprises media access control layer addresses for the one or more second apparatuses.

6. The method of claim 1, wherein the connectivity information comprises location information for the one or more second apparatuses.

7. The method of claim 6, wherein the location information is determined using a Received Signal Strength Indicator (RSSI) measurement using the first protocol.

8. The method of claim 6, wherein the location information is determined using a round-trip delay time measurement obtained using the first protocol;
and preferably
wherein the round trip delay time measurement is obtained using a departure time of a request to send message and an arrival time of a clear to send message; and/or
wherein the round trip delay time is measurement is obtained using a departure of a probe message and an arrival time of an acknowledgement message.

9. The method of claim 1, wherein the connectivity information comprises at least one of:
timing information for the one or more second apparatuses;
a number of antennas available for the one or more second apparatuses;
directions available for communication for the one or more second apparatuses;
second protocol compatibility information for the one or more second apparatuses;
a list of second protocol channels available for the one or more second apparatuses; or
authentication information for the one or more second apparatuses.

10. The method of claim 1, wherein the first protocol comprises at least one of:
wireless local area network based protocol.
a cellular network protocol;
a Bluetooth protocol; or
an IEEE 802.11 protocol.

11. The method of claim 1, wherein the establishment of the session comprises:
selecting the one of the one or more second apparatuses;
transmitting a session initiation message using the first protocol to prompt the selected node to activate a transceiver associated with the second protocol;
receiving beacon information from the selected one of the one or more second apparatuses; and
performing beam training with the selected one of the one or more second apparatuses.

12. The method of claim 11, wherein the one of the one or more second apparatuses is selected based on at least one of:
a highest first protocol link quality;
a defined functional capability; or
a defined device identifier.

13. The method of claim 1, wherein the directional communication comprises communications in the session being focused within a defined radial range; and preferably
wherein the defined radial range is determined through beam training with the one of the one or more second apparatuses.

14. A computer program product, comprising:
a computer-readable medium comprising code executable at an apparatus to carry out the steps of claims 1 to 13.

15. An apparatus (110, 300) for wireless communications, comprising:
means (302, 304, 306, 702) for obtaining connectivity information (126, 332) using a first protocol (124) for one or more second apparatuses (130); and
means (306, 318, 320, 704) for establishing a session with one of the one or more second apparatuses selected based on the connectivity information for direct and directional communication using a directionally based second protocol (112), wherein the first protocol is different than the second protocol.

## Patentansprüche

1. Ein Verfahren (200) für Drahtloskommunikationen, das Folgendes aufweist:
Erlangen (206) von Konnektivitätsinformation (126) an einer ersten Vorrichtung (110) für eine oder mehrere zweite Vorrichtungen (130) von einem Konnektivitätsassistenzsystem (120) unter Verwendung eines ersten Protokolls (124); und
Einrichten (216) einer Sitzung mit einer der einen oder mehreren zweiten Vorrichtungen, die ausgewählt sind basierend auf der Konnektivitätsinformation für direkte und direktionale Kommunikation unter Verwendung eines direktional basierten zweiten Protokolls (112), wobei sich das erste Protokoll von dem zweiten Protokoll unterscheidet.

2. Verfahren nach Anspruch 1, wobei die Konnektivitätsinformation erlangt wird durch Senden von anfänglicher Konnektivitätsinformation und Empfangen der Konnektivitätsinformation ansprechend auf die gesendete anfängliche Konnektivitätsinformation.

3. Verfahren nach Anspruch 1, wobei die Konnektivitätsinformation durch Scannen nach einem Beacon-Signal erlangt wird, das mit wenigstens einem der einen oder mehreren zweiten Vorrichtungen assoziiert ist, und zwar über mehrere Kanäle hinweg unter Verwendung des ersten Protokolls.

4. Verfahren nach Anspruch 1, wobei die Konnektivitätsinformation erlangt wird durch Senden einer Proben- bzw. Testanfrage und Empfangen von wenigstens einer Testantwort von einer der einen oder mehreren zweiten Vorrichtungen, unter Verwendung des ersten Protokolls.

5. Verfahren nach Anspruch 1, wobei die Konnektivitätsinformation Einrichtungsidentifikationselemente für die eine oder mehreren zweiten Vorrichtungen aufweist; und/oder
wobei die Konnektivitätsinformation Medienzugriffssteuerungsschichtadressen bzw. Media-Access-Control-Layer-Adressen für die eine oder mehreren zweiten Vorrichtungen aufweist.

6. Verfahren nach Anspruch 1, wobei die Konnektivitätsinformation Lage- bzw. Standortinformation für die eine oder mehreren zweiten Vorrichtungen aufweist.

7. Verfahren nach Anspruch 6, wobei die Standortinformation unter Verwendung einer Messung eines Indikators einer empfangenen Signalstärke bzw. einer RSSI-Messung (RSSI = Received Signal Strength Indicator) unter Verwendung des ersten Protokolls bestimmt wird.

8. Verfahren nach Anspruch 6, wobei die Standortinformation bestimmt wird unter Verwendung einer Umlaufverzögerungszeitmessung, die erlangt wird unter Verwendung des ersten Protokolls, und
wobei vorzugsweise die Umlaufverzögerungszeitmessung erlangt wird unter Verwendung einer Abgangs- bzw. Startzeit einer Anfrage, eine Nachricht zu senden, und einer Ankunftszeit einer Frei-zum Senden- bzw. Clear-To-Send-Nachricht; und/oder
wobei die Umlaufverzögerungszeit eine Messung ist, die unter Verwendung eines Abgangs bzw. Starts einer Testnachricht und einer Ankunftszeit einer Bestätigungsnachricht erlangt wird.

9. Verfahren nach Anspruch 1, wobei die Konnektivitätsinformation wenigstens eines von Folgendem aufweist:
Timing- bzw. Zeitsteuerungsinformation für die eine oder die mehreren zweiten Vorrichtungen;
eine Anzahl von Antennen, die für die eine oder die mehreren zweiten Vorrichtungen verfügbar sind;
Richtungen bzw. Anweisungen, die zur Kommunikation für die eine oder die mehreren zweiten Vorrichtungen verfügbar sind;
zweite Protokollkompatibilitätsinformation für die eine oder die mehreren zweiten Vorrichtungen;
eine Liste von zweiten Protokollkanälen, die für die eine oder die mehreren zweiten Vorrichtungen verfügbar sind; oder
Authentifizierungsinformation für die eine oder die mehreren zweiten Vorrichtungen.

10. Verfahren nach Anspruch 1, wobei das erste Protokoll wenigstens eines von Folgendem aufweist:
ein drahtloses, lokalnetzbasiertes bzw. WLAN-basiertes Protokoll;
ein Zellularnetzwerkprotokoll;
ein Bluetooth-Protokoll; oder
ein IEEE-802.11-Protokoll.

11. Verfahren nach Anspruch 1, wobei der Aufbau der Sitzung Folgendes aufweist:
Auswählen einer der einen oder mehreren zweiten Vorrichtungen;
Senden einer Sitzungsinitüerungsnachricht unter Verwendung des ersten Protokolls, um den ausgewählten Knoten zu veranlassen, einen Transceiver zu aktivieren, der mit dem zweiten Protokoll assoziiert ist;
Empfangen von Beacon-Information für die ausgewählte eine der einen oder mehreren zweiten Vorrichtungen; und
Durchführen von Beam-Training mit der ausgewählten einen Vorrichtung der einen oder mehreren zweiten Vorrichtungen.

12. Verfahren nach Anspruch 11, wobei die eine der einen oder mehreren zweiten Vorrichtungen basierend auf wenigstens einem von Folgendem ausgewählt ist:
einer höchsten ersten Protokollverbindungsqualität;
einer definierten funktionalen Fähigkeit; oder
einem definierten Einrichtungsidentifikationselement.

13. Verfahren nach Anspruch 1, wobei die direktionale Kommunikation Kommunikationen in der Sitzung aufweist, die innerhalb eines definierten radialen Bereichs fokussiert sind; und
wobei vorzugsweise der definierte radiale Bereich bestimmt wird durch Beam-Training mit einer der einen oder mehreren zweiten Vorrichtungen.

14. Ein Computerprogrammprodukt, das Folgendes aufweist:
ein computerlesbares Medium, das Code aufweist, der an einer Vorrichtung ausgeführt werden kann, um die Schritte der Ansprüche 1 bis 13 auszuführen.

15. Eine Vorrichtung (110, 300) für Drahtloskommunikationen, die Folgendes aufweist:
Mittel (302, 304, 306, 702) zum Erlangen von Konnektivitätsinformation (126, 332) unter Verwendung eines ersten Protokolls (124) für eine oder mehrere zweite Vorrichtungen (130); und
Mittel (306, 318, 320, 704) zum Einrichten einer Sitzung mit einer der einen oder mehreren zweiten Vorrichtungen, und zwar ausgewählt basierend auf der Konnektivitätsinformation für direkte und direktionale Kommunikation unter Verwendung eines direktional basierten zweiten Protokolls (112), wobei das sich das erste Protokoll vom zweiten Protokoll unterscheidet.

## Revendications

1. Procédé (200) de communication sans fil, comprenant les étapes suivantes :
obtenir (206) au niveau d'un premier dispositif (110) des informations de connectivité (126) pour un ou plusieurs deuxièmes dispositifs (130) à partir d'un système d'assistance à la connectivité (120) en utilisant un premier protocole (124) ; et
établir (216) une session avec l'un desdits un ou plusieurs deuxièmes dispositifs, sélectionné sur la base des informations de connectivité pour une communication directe et directionnelle, en utilisant un deuxième protocole (112) à base de directionnalité, le premier protocole étant différent du deuxième protocole.

2. Procédé selon la revendication 1, dans lequel les informations de connectivité sont obtenues en transmettant des informations de connectivité initiales et en recevant les informations de connectivité en réponse aux informations de connectivité initiales transmises.

3. Procédé selon la revendication 1, dans lequel les informations de connectivité sont obtenues en analysant un signal de balise, associé à au moins l'un desdits un ou plusieurs deuxièmes dispositifs, à travers plusieurs canaux en utilisant le premier protocole.

4. Procédé selon la revendication 1, dans lequel les informations de connectivité sont obtenues en émettant une requête de sondage et en recevant au moins une réponse de sondage à partir desdits un ou plusieurs deuxièmes dispositifs en utilisant le premier protocole.

5. Procédé selon la revendication 1, dans lequel les informations de connectivité comprennent des identificateurs de dispositifs pour lesdits un ou plusieurs deuxièmes dispositifs ; et/ou
dans lequel les informations de connectivité comprennent des adresses de couche de commande d'accès au support pour lesdits un ou plusieurs deuxièmes dispositifs.

6. Procédé selon la revendication 1, dans lequel les informations de connectivité comprennent des informations de position pour lesdits un ou plusieurs deuxièmes dispositifs.

7. Procédé selon la revendication 6, dans lequel les informations de position sont déterminées en utilisant une mesure d'Indicateur d'Intensité de Signal Reçu (RSSI) en utilisant le premier protocole.

8. Procédé selon la revendication 6, dans lequel les informations de position sont déterminées en utilisant une mesure de temps d'aller-retour obtenue en utilisant le premier protocole ; et de préférence
dans lequel la mesure du temps d'aller-retour est obtenue en utilisant un temps de départ d'un message du type demande d'envoi et un temps d'arrivée d'un message du type prêt à émettre ; et/ou
dans lequel la mesure du temps d'aller-retour est obtenue en utilisant un temps de départ d'un message de sondage et un temps d'arrivée d'un message d'accusé de réception.

9. Procédé selon la revendication 1, dans lequel les informations de connectivité comprennent au moins l'un des éléments suivants :
des informations temporelles pour lesdits un ou plusieurs deuxièmes dispositifs ;
un nombre d'antennes disponibles pour lesdits un ou plusieurs deuxièmes dispositifs ;
des directions disponibles pour les communications pour lesdits un ou plusieurs deuxièmes dispositifs ;
des informations de compatibilité avec un deuxième protocole pour lesdits un ou plusieurs deuxièmes dispositifs ;
une liste de canaux du deuxième protocole disponibles pour lesdits un ou plusieurs deuxièmes dispositifs ; ou
des informations d'authentification pour lesdits un ou plusieurs deuxièmes dispositifs.

10. Procédé selon la revendication 1, dans lequel le premier protocole comprend au moins l'un des protocoles suivantes :
un protocole basé sur un réseau local sans fil ;
un protocole de réseau cellulaire ;
un protocole Bluetooth ; ou
un protocole IEEE 802.11.

11. Procédé selon la revendication 1, dans lequel l'établissement de la session comprend les étapes suivantes :
sélectionner le dispositif desdits un ou plusieurs deuxièmes dispositifs ;
émettre un message de lancement de session en utilisant le premier protocole pour inviter le noeud sélectionné à activer un émetteur-récepteur associé au deuxième protocole ;
recevoir des informations de balise à partir du dispositif sélectionné desdits un ou plusieurs deuxièmes dispositifs ; et
réaliser un apprentissage de faisceau avec le dispositif sélectionné desdits un ou plusieurs deuxièmes dispositifs.

12. Procédé selon la revendication 11, dans lequel le dispositif sélectionné desdits un ou plusieurs deuxièmes dispositifs est sélectionné sur la base d'au moins l'un des éléments suivantes :
la plus haute qualité de liaison du premier protocole ;
une capacité fonctionnelle définie ; ou
un identificateur de dispositif défini.

13. Procédé selon la revendication 1, dans lequel la communication directionnelle comprend des communications dans la session qui est ciblée dans une plage radiale définie ; et de préférence
dans lequel la plage radiale définie est déterminée par l'intermédiaire d'un apprentissage de faisceau avec le dispositif desdits un ou plusieurs deuxièmes dispositifs.

14. Produit programme d'ordinateur, comprenant :
un support lisible par un ordinateur comprenant du code exécutable au niveau d'un dispositif pour réaliser les étapes des revendications 1 à 13.

15. Dispositif (110, 300) pour des communications sans fil, comprenant :
des moyens (302, 304, 306, 702) pour obtenir des informations de connectivité (126, 332) en utilisant un premier protocole (124) pour un ou plusieurs deuxièmes dispositifs (130) ; et
des moyens (306, 318, 320, 704) pour établir une session avec l'un desdits un ou plusieurs deuxièmes dispositifs, sélectionné sur la base des informations de connectivité pour une communication directe et directionnelle en utilisant un deuxième protocole (112) à base de directionnalité, le premier protocole étant différent du deuxième protocole.
